# EUROPÄISCHE PATENTSCHRIFT

(11) **EP 0 686 516 B1**
(45) Veröffentlichungstag und Bekanntmachung des Hinweises auf die Patenterteilung: **18.03.1998**
(21) Anmeldenummer: 95108069.6
(22) Anmeldetag: 26.05.1995
(51) Int. Cl.: B60C 11/03, B60C 19/00, B60C 11/00

(54) **Fahrzeugluftreifen mit asymmetrischer Lauffläche**
Vehicle tyre with asymmetrical tread
Bandage pneumatique pour véhicule pourvu d'un profil asymétrique

(30) Priorität: 10.06.1994 DE 4420315
(43) Veröffentlichungstag der Anmeldung: 13.12.1995
(73) Patentinhaber: Continental Aktiengesellschaft, 30165 Hannover (DE)
(72) Erfinder: Meyer-Adlung, Jobst, D-30171 Hannover (DE); Spitz, Wolfgang, D-30455 Hannover (DE); Rohde, Dieter, D-31275 Lehrte (DE); Praetorius, Siegfried, D-30890 Barsinghausen (DE); Hartmann, Klaus-Heiner, D-31535 Neustadt (DE)

(56) Entgegenhaltungen:
- EP-A- 0 578 216
- EP-A- 0 590 526
- FR-A- 2 484 336
- PATENT ABSTRACTS OF JAPAN vol. 015 no. 290 (M-1139) ,23.Juli 1991 & JP-A-03 104707 (YOKOHAMA RUBBER CO LTD:THE) 1.Mai 1991,

## Beschreibung

Die Erfindung bezieht sich auf einen Fahrzeugluftreifen mit sichtbar asymmetrischer Lauffläche mit mindestens drei Längsrillen. Sie bezieht sich insbesondere auf solche Fahrzeugluftreifen, die an ungelenkten vorderen und/oder hinteren Achsen mehrachsiger, insbesondere dreiachsiger, Mehrachsaggregate von Sattelaufliegern oder Anhängern verwendet werden. Mehrachsaggregate sowohl bei Anhängern als auch bei Sattelaufliegern sind meistens ungelenkt, weniger wegen der zusätzlichen Anschaffungskosten für eine Lenkung der vorderen und/oder Achse(n) sondern vor allem wegen dem zusätzlichen Gewicht einer solchen Lenkkinematik, welches angesichts vom Gesetz- und Verordnungsgeber festgelegter höchstzulässiger Achslasten zwangsläufig die verbleibende Nutzlast verringert.

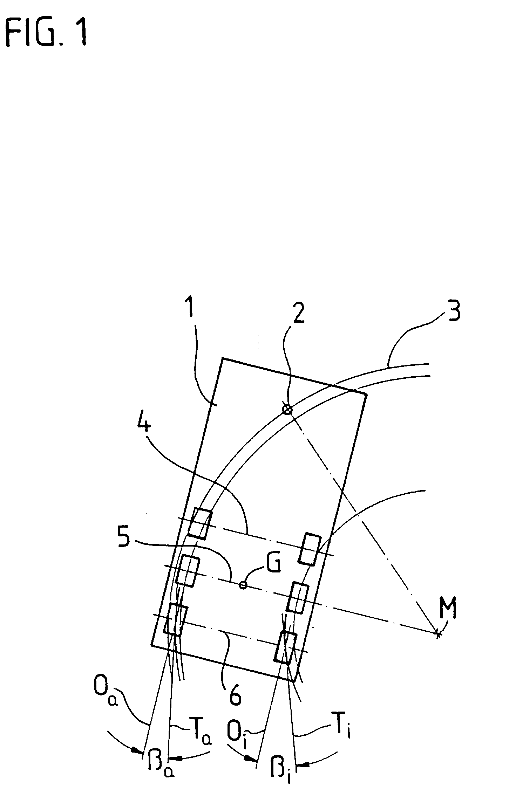

Dieses Problem wird anhand der Figur 1 erläutert. Sie zeigt schematisch einen dreiachsigen Sattelauflieger 1, dessen Kupplungspunkt 2 durch einen nicht dargestellten Sattelschlepper auf einer Kreisbahn 3 um einen Mittelpunkt M geführt wird. Bei quasistatischer Betrachtung sucht sich das die drei ungelenkten Achsen 4, 5 und 6 umfassende Achsaggregat eine - engere - Kreisbahn um den Punkt M, wobei eine Axiale durch den Lastmittelpunkt G des Achsaggregates durch den Kreisbahnmittelpunkt M geht. Die Lage von G hängt ab von der Achslastverteilung und den Achsabständen. Sind die Achsabstände zwischen vorderer und innerer und zwischen innerer und hinterer Achse gleich und stimmen die Achslasten überein, so liegt G genau auf der inneren Achse. Dieser Fall ist hier gezeigt. In diesem typischen Fall laufen die beiden Räder der inneren Achse 5 exakt tangential auf einer Kreisbahn um M.

Die vordere Achse 4 und die hintere Achse 6 hingegen können infolge der fehlenden Lenkung keine exakt tangentiale Bahn einnehmen, vielmehr ergibt sich ein Differenzwinkel βᵢ zwischen der Tangente Tᵢ an die Kreisbahn des kurveninneren Rades und der Umfgangsrichtung Oᵢdieses Rades, also ein Zwangsschlupf. Analoges gilt für das kurvenäußere Rad, wo die entsprechenden Größen mit dem Index a statt i bezeichnet sind.

Wird die gleiche Kupplungs-Kurvenbahn dynamisch betrachtet, so treten über der Geschwindigkeit quadratisch anwachsende Fliehkräfte hinzu, denen durch entsprechende Zentripetalkräfte das Gleichgewicht gehalten werden muß; damit das Hinterachsaggregat eine resultierende Querkraft aufnehmen kann, benötigt es entsprechend dem Schräglaufwinkel-Querkraftdiagramm der Reifen einen resultierenden Schräglaufwinkel, der sich den zuvor quasistatisch untersuchten Winkelverhältnissen überlagert. Also nehmen tatsächlich die Räder der mittleren Achse 5 einen Schräglaufwinkel gegenüber der Tangenten an die Kurvenbahn an.

Diese zur Aufbringung einer Zentripetalkraft erforderlichen Schräglaufwinkel an der mittleren Achse sind so orientiert wie die zuvor quasistatisch bestimmten Schräglaufwinkeln an der hinteren Achse 6. Das Erfordernis, den Zentrifugalkräften das Gleichgewicht zu halten, führt also zur weiteren Vergrößerung der - zentripetal wirkenden - Schräglaufwinkelbeträge an der hinteren Achse 6, dem Aufbau kleinerer, gleich orientierter Schräglaufwinkel an der mittleren Achse 5 und einem Abbau der quasistatisch bestimmten, zentrifugal wirkenden Schräglaufwinkels (und bei extremen Fliehkräften im Verhältnis zur Bahnkrümmung schließlich einer Orientierungsumkehr zu zentripetal hin) an der vorderen Achse 4.

Diese dynamische Betrachtung zeigt, daß an ungelenkten Mehrachsaggregaten die höchste Querkraftbeanspruchung an der hinteren Achse auftritt; dementsprechend ist dort der Verschleiß am größten. An Dreiachsaggregaten sind in der Praxis Laufleistungen bauartgleicher Reifen auf der hinteren Achse von 80.000, auf der vorderen Achse von 120.000 und auf der inneren Achse von 300.000 km geläufig.

Aufgabe der Erfindung ist es, die Lebensdauer gattungsgemäßer Fahrzeugluftreifen zu erhöhen, insbesondere der Reifen für Sattelauflieger oder Anhänger mit ungelenkten Mehrachsaggregaten, insbesondere auf der hinteren Achse.

Die Aufgabe wird erfindungsgemäß dadurch gelöst, daß die Weite der fahrzeugäußersten Längsrille zwischen 12 % und 17 % der Aufstandsflächenbreite (L) beträgt, also ungewöhnlich breit ist. Hierdurch wird eine größere Verformbarkeit in der Axialen und damit zusätzliche Freiheit in der wirksamen Lenkwinkeleinstellung des besonders abriebgefährdeten fahrzeugäußeren Bereiches gegenüber dem Rest der Lauffläche erreicht. Gemäß Anspruch 4 sollte die Weite der fahrzeugäußeren Längsrille vorzugsweise mindestens so groß sein wie die Summe aus den Weiten der übrigen Längsrillen.

Vorzugsweise befindet sich die erfindungsgemäß verbreiterte Längsrille gemäß Anspruch 2 in solchem Abstand zum fahrzeugäußeren Laufflächenrand, daß der zwischen dieser Längsrille und dem fahrzeugäußeren Laufflächenrand verbleibende Streifen eine Breite zwischen 20 % und 25 % der gesamten Aufstandsflächenbreite aufweist. Auf diese Weise ist sichergestellt, daß dieser Positivbereich hinreichend kräftig ist zur Aufnahme der eingangs in ihrer Ursache beschriebenen Axialkräfte.

Aus dem gleichen Grunde sollten vorzugsweise gemäß Anspruch 3 innerhalb dieses fahrzeugäußeren Streifens keine Rillen von einer Breite über 1,5 mm angeordnet sein, also allefalls Einschnitte. Da bei regennasser Straße der Wasserstaudruck in der Reifenmitte sein Maximum erreicht, kann man sich einen ungewöhnlich niedrigen Negativanteil in diesem Laufstreifen erlauben; vorzugsweise sollte er zwischen 4 und 8 % liegen.

Der erfindungsgemäße Effekt des verlangsamten Abriebes bei Axialschlupf wird weiter verstärkt durch eine Weiterbildung gemäß Anspruch 5, also dadurch, daß die Lauffläche axial geteilt ist und zwar in der Weise, daß ein axial äußerer Streifen gemäß DIN 53516 höchstens 70 % des Abriebvolumens zeigt wie der übrige Bereich der Lauffläche.

Vorzugsweise wird für den fahrzeugäußeren Streifen ein Material verwendet, das gemäß DIN 53516 nur 50 % bis 60 % des Abriebvolumens des übrigen Laufflächenbereiches zeigt.

Dem Fachmann sind mehrere Maßnahmen zur Senkung des Abriebvolumens über der Zeit geläufig. Eine dieser Maßnahmen ist die Erhöhung der Härte. Sie ist durch eine erhöhte Vernetzungsstellendichte erreichbar, was mit einer erhöhten Schwefeldosierung zusammen mit entsprechenden Anpassungen in der Beschleunigerdosierung möglich ist. Hiermit ginge eine Senkung des Reibungsbeiwertes gegenüber Asphalt einher, die in engen Grenzen toleriert werden kann, insbesondere dann, wenn zur Erhaltung der Bremsleistung die Anzahl der Quereinschnitte in der Reifenlauffläche und/oder der Reibungsbeiwert in weniger abriebgefährdeten anderen Laufflächenzonen erhöht wird. Eine kleine Reibwertabsenkung in axialer Richtung vergrößert zudem den abriebmindernden Effekt, weil dadurch in den besonders abriebgefährdeten Zonen die anfallende Reibleistung vermindert wird, freilich unter Inkaufnahme einer erhöhten Reibleistung in den übrigen Zonen und auf der mittleren Achse.

Der Abriebwiderstand kann aber auch durch andere Füllstofftypen und/oder andere Füllstoffdosierung erhöht werden. Dem Fachmann ist bekannt, daß es dabei - auch wenn eine Erhöhung der Härte einhergeht - nicht zu einem Abfall des Reibungsbeiwertes kommen muß. Dem Fachmann ist ferner bekannt, daß, insoweit eine erhöhte Hysteresis verwendet wird, sich diese Erhöhung nur in dem für den Reibungsbeiwert entscheidenden hohen Frequenzbereich zeigen sollte, nicht aber in dem für den Rollwiderstand entscheidenden niedrigeren Frequenzbereich, um eine Erhöhung des Energieverbrauches sowie eine Erhöhung der Laufflächentemperatur und eine ansonsten einhergehende Minderung der Runderneuerungsfähigkeit zu vermeiden. Dem Fachmann ist insbesondere bekannt, daß das Frequenzband hoher Hysteresis nach oben verschoben wird bei Verkleinerung der Molekülgröße der Füllstoffe und/oder Polymere.

Um die Belastung an der Grenze zwischen den beiden Laufflächenstreifen erträglich zu halten, sollte der Unterschied im statischen Modul höchstens 4 Shore-Härtegrade betragen.

Aber auch bei Einhaltung großer Ähnlichkeit in der Steifigkeit der verschiedenen Materialien empfiehlt es sich, die Grenze zwischen den beiden verschieden abriebfesten Streifen in einen wenig belasteten Reifenbereich zu legen, insbesondere in den Mittenbereich der angrenzenden Längsrille, wobei dieser Mittenbereich als der symmetrisch um die Rillenmittellinie liegende Bereich mit einer Breite von 60 % der Rillenweite in halber Profiltiefe definiert sei.

Weiterhin ist dem Fachmann bekannt, daß der Abriebwiderstand durch eine Erhöhung des Anteiles von Butadien (BR) und/oder Styrolbutadien (SBR) zulasten des Naturkautschukanteiles (NR) erhöht werden kann. Dabei können Differenzen im statischen E-Modul weitgehend vermieden werden.

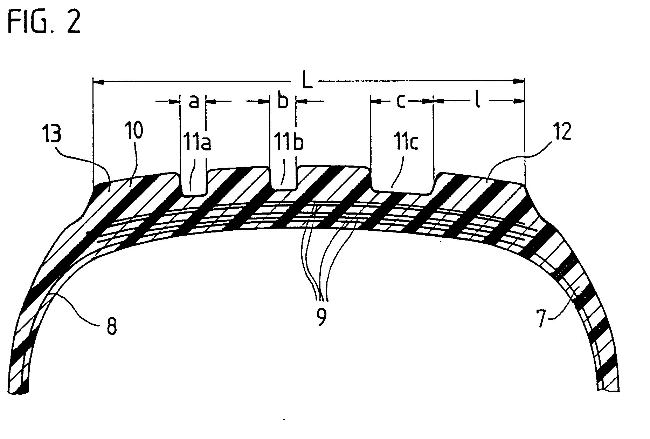

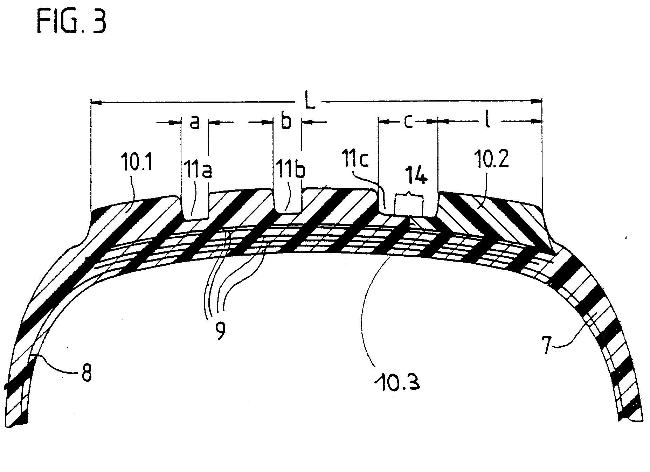

Die Erfindung wird nachfolgend anhand der Figuren 2 und 3 näher erläutert. Es zeigt:
- Fig. 2: einen erfindungsgemäßen Fahrzeugreifen im Querschnitt, mit einem axial ungeteilten Laufstreifen und
- Fig. 3: in analoger Darstellung einen solchen erfindungsgemäßen Fahrzeugreifen, dessen Laufstreifen axial geteilt ist.

Figur 2 zeigt einen erfindungsgemäßen Fahrzeugreifen 7 im Querschnitt. Oberhalb der Karkasse 8 befinden sich vier Gürtellagen 9 und darüber ein axial ungeteilter Laufstreifen 10. Selbstverständlich könnte in an sich bekannter Weise der Laufstreifen 10 radial in eine innen liegende Base und eine außen liegende Cap unterteilt sein, was hier allerdings nicht dargestellt ist, weil Existenz oder Nichtexistenz einer solchen Radialunterteilung für die Erfindung unwesentlich ist.

In dem gezeigten erfindungsgemäßen Reifens 7 stimmen die Weiten a und b der beiden Längsrillen 11a und 11b überein. Die Weite c der Längsrille 11c gegenüber dem Stand der Technik vergrößert ist; sie (c) ist etwas größer als die Weiten a und b zusammen und beträgt hier 15,1 % der Laufstreifenbreite L. Die Breite l des an der Fahrzeugaußensseite zu plazierenden Profilsteges 12 beträgt 21,5 % der Laufflächenbreite L und ist etwas größer als die Breite des fahrzeuginneren Steges 13.

Figur 3 zeigt einen erfindungsgemäßen Fahrzeugreifen 7 im Querschnitt. Oberhalb der Karkasse 8 befinden sich vier Gürtellagen 9 und darüber ein Laufstreifen 10, der in einen fahrzeuginneren Streifen 10.1 und einen fahrzeugäußeren Streifen 10.2 aufgeteilt ist. Der fahrzeugäußere Streifen 10.2 weist erfindungsgemäß höchstens 70 % des gemäß DIN 53516 zu messenden Abriebvolumens auf im Vergleich zum fahrzeuginneren Streifen 10.1.

Selbstverständlich können beide Streifen 10.1 und 10.2 wie an sich bekannt auch in der Radialen unterteilt sein, wobei die innere Schicht dann als Base und die äußere als Cap bezeichnet wird. In solchem Falle ist das bevorzugte, den Abrieb kennzeichnende Merkmal allein auf die beiden Caps zu beziehen.

Die in den Figuren 2 und 3 dargestellten Reifen 7 sind für Sattelauflieger bestimmt, insbesondere für die erste und dritte Achse von Sattelaufliegern mit Dreiachsaggregaten. Sie weisen drei Längsrillen 11 auf, die zwecks Unterscheidbarkeit von der Fahrzeuginnenseite zur Fahrzeugaußenseite mit den Indices a, b und c genauer gekennzeichnet werden können, insbesondere wird also die fahrzeugäußerste Längsrille mit 11c bezeichnet. Als Symbol für die jeweiligen Rillenweiten - zu messen in halber Profiltiefe des unbenutzten Reifens - wird der jeweilige Index selber verwendet. In beiden Ausführungsbeispielen ist das erfindungsgemäße Merkmal gezeigt, daß die Weite c der fahrzeugäußersten Längsrille zwischen 12 % und 17 % der Aufstandsflächenbreite L beträgt. Ferner ist in beiden Figuren 2 und 3 das bevorzugte Merkmal gezeigt, daß die Summe der beiden Weiten a und b der Längsrillen 11a und 11b höchstens so groß ist wie die Weite c der Längsrille 11c.

Figur 3 zeigt eine bevorzugte Ausführung gemäß Anspruch 5 mit einem axial geteilten Laufstreifen 10, wobei der fahrzeuginnere, breitere Einzelstreifen mit 10.1 und der fahrzeugäußere, schmalere, abriebbeständigere Einzelstreifen mit 10.2 bezeichnet ist. Die Figur zeigt ferner innerhalb der fahrzeugäußeren Rille 11c den Mittenbereich 14, innerhalb dessen sich die Grenze 10.3 zwischen den beiden axial geschichteten Laufstreifen 10.1 und 10.2 befindet; in dieser Schnittebene - bei Zickzackförmigkeit der Rille 11c schwankt die Lage des Mittenbereiches 14 von Schnittebene zu Schnittebene - liegt die Grenze 10.3 genau in der Mitte des Grundes der Rille 11c.

Erfindungsgemäße Luftreifen führen zu einer Reduzierung des Wartungsaufwandes insbesondere an Sattelaufliegern aber auch an Anhängern mit ungelenkten Mehrachsaggregaten durch verlangsamten Reifenabrieb an den besonders abriebgefährdeten fahrzeugäußeren Reifenseiten insbesondere auf den mangels Lenkung nicht tangential lauffähigen Achsen.

## Patentansprüche

1. Fahrzeugluftreifen (7) mit asymmetrischer Lauffläche (10) mit mindestens drei Längsrillen (11),
**dadurch gekennzeichnet,** daß die Weite (c) der fahrzeugäußersten Längsrille (11c) zwischen 12 % und 17 % der Aufstandsflächenbreite (L) beträgt.

2. Fahrzeugluftreifen (7) gemäß Anspruch 1 dadurch gekennzeichnet, daß der Profilsteg (12), der sich zwischen der fahrzeugäußersten Längsrille (11c) und dem fahrzeugäußeren Aufstandsflächenrand erstreckt, eine Breite (l) zwischen 20 % und 25 % der gesamten Aufstandsflächenbreite (L) aufweist.

3. Fahrzeugluftreifen (7) nach Anspruch 2 dadurch gekennzeichnet, daß innerhalb des fahrzeugäußeren Profilsteges (12) keine Rillen von einer Breite über 1,5 mm angeordnet sind.

4. Fahrzeugluftreifen (7) nach einem der vorangehenden Ansprüche dadurch gekennzeichnet, daß die Weite (c) der fahrzeugäußeren Längsrille (11c) mindestens so groß ist wie die Summe aus den Weiten (a, b) der übrigen Längsrillen (11a, 11b).

5. Fahrzeugreifen (7) nach einem der vorangehenden Ansprüche dadurch gekennzeichnet, daß die Lauffläche (10) aus mindestens zwei hinsichtlich ihres Werkstoffes verschiedenen, axial nebeneinander angeordneten Streifen (10.1 und 10.2) zusammengesetzt ist, wobei der axial äußerste Streifen (10.2) gemäß DIN 53516 höchstens 70 % des Abriebvolumens zeigt wie der übrige Bereich (10.1) der Lauffläche.

6. Fahrzeugluftreifen (7) nach einem der vorangehenden Ansprüche dadurch gekennzeichnet, daß die Grenze (10.3) zwischen den beiden verschieden abriebfesten Streifen (10.1 und 10.2) sich im Mittenbereich (14) der angrenzenden Längsrille (11c) befindet, wobei dieser Mittenbereich (14) als der symmetrisch um die Rillenmittellinie liegende Bereich mit einer Breite von 60 % der Rillenweite (c) in halber Profiltiefe definiert ist.

## Claims

1. Pneumatic vehicle tyre (7) having an asymmetrical tread surface (10) provided] with at least three longitudinal grooves (11), characterised in that the width (c) of the outermost longitudinal groove (11c) of the vehicle tyre amounts to between 12 % and 17 % of the supporting face width (L).

2. Pneumatic vehicle tyre (7) according to claim 1, characterised in that the profile web (12), which extends between the outermost longitudinal groove (11c) of the vehicle tyre and the outer supporting face edge of the vehicle tyre, has a width (l) between 20 % and 25 % of the total supporting face width (L).

3. Pneumatic vehicle tyre (7) according to claim 2, characterised in that no grooves of a width more than 1.5 mm are disposed internally of the outer profile web (12) of the vehicle tyre.

4. Pneumatic vehicle tyre (7) according to one of the preceding claims, characterised in that the width (c) of the outer longitudinal groove (11c) of the vehicle tyre is at least as large as the sum of the widths (a, b) of the remaining longitudinal grooves (11a, 11b).

5. Pneumatic vehicle tyre (7) according to one of the preceding claims, characterised in that the tread surface (10) comprises at least two strips (10.1 and 10.2), which differ in respect of their material and are disposed axially adjacent each other, the axially outermost strip (10.2) according to DIN 53516 exhibiting at most 70 % of the wear volume of the remaining region (10.1) of the tread surface.

6. Pneumatic vehicle tyre (7) according to one of the preceding claims, characterised in that the boundary (10.3) between the two strips (10.1 and 10.2), which have different resistances to wear, is situated in the central region (14) of the abutting longitudinal groove (11c), this central region (14) being defined as the region lying symmetrically around the centre line of the groove with a width of 60 % of the groove width (c) in half the profile depth.

## Revendications

1. Bandage pneumatique pour véhicule (7) à surface de roulement asymétrique (10) comportant au moins trois rainures longitudinales (11), caractérisé en ce que la largeur (c) de la rainure longitudinale externe du véhicule (11c) constitue ente 12 et 17% de la largeur de la surface d'appui (L).

2. Bandage pneumatique pour véhicule (7) selon la revendication 1, caractérisé en ce que la nervure de profil (12) qui s'étend entre la rainure longitudinale externe du véhicule (11c) et le bord de la surface d'appui extérieur du véhicule, présente une largeur (l) comprise entre 20 et 25% du total de la largeur de la surface d'appui (L).

3. Bandage pneumatique pour véhicule (7) selon la revendication 2, caractérisé en ce qu'aucune rainure d'une largeur supérieure à 1,5 mm ne se trouve à l'intérieur de la nervure de profil externe du véhicule (12).

4. Bandage pneumatique pour véhicule (7) selon l'une des revendications précédentes, caractérisé en ce que la largeur (c) de la rainure longitudinale externe du véhicule (11c) est au moins aussi grande que la somme des largeurs (a, b) des autres rainures longitudinales (11a, 11b).

5. Bandage pour véhicule (7) selon l'une des revendications précédentes, caractérisé en ce que la bande de roulement (10) est composée d'au moins deux bandes, différentes quant à leur matériau, disposées axialement l'une à côté de l'autre (10.1 et 10.2), la bande axiale externe (10.2) représentant selon DIN 53516 au plus 70% du volume d'usure par rapport au reste de la zone (10.1) de la surface de roulement.

6. Bandage pneumatique pour véhicule (7) selon l'une des revendications précédentes, caractérisé en ce que la limite (10.3) entre les deux différentes bandes résistant à l'usure (10.1 et 10.2) se trouve dans la zone médiane (14) de la rainure longitudinale adjacente (11c), cette zone médiane (14) étant définie comme la zone située symétriquement par rapport à la ligne médiane de la rainure avec une extension représentant 60% de la largeur de la rainure (c) à la moitié de l'épaisseur du profil.
